# EUROPÄISCHE PATENTANMELDUNG

(11) **EP 4 056 940 A1**
(43) Veröffentlichungstag der Anmeldung: **14.09.2022**
(21) Anmeldenummer: 22160388.9
(22) Anmeldetag: 07.03.2022
(51) Int. Cl.: F26B 3/04, F26B 9/06, F26B 21/04, F26B 23/02

(54) **VORRICHTUNG UND VERFAHREN ZUM TROCKNEN VON GEGENSTÄNDEN UND/ODER MATERIALIEN, INSBESONDERE HOLZ**

(30) Priorität: 09.03.2021 DE 102021105614
(71) Anmelder: Hauptkorn, Herbert, 91623 Sachsen bei Ansbach (DE)
(72) Erfinder: Hauptkorn, Herbert, 91623 Sachsen bei Ansbach (DE)
(74) Vertreter: Schlögl, Markus

(57) **Zusammenfassung**

Die Erfindung betrifft eine Vorrichtung (10) zum Trocknen von Gegenständen und Materialien, insbesondere Holz. Die Vorrichtung (10) umfasst einen Trockenraum (12) und einen langgestreckten Umluftkanal (14), dessen Endbereiche mit dem Trockenraum (12) gekoppelt sind. Wenigstens eine Gebläseanordnung (18) ist im Umluftkanal (14) angeordnet, so dass eine Umluft zwischen dem Trockenraum (12) und dem Umluftkanal (14) zirkulieren kann. Wenigstens eine Heizvorrichtung (20, 22) ist im Trockenraum (12) und/oder Umluftkanal (14) angeordnet und zum Erwärmen der Umluft vorgesehen. Wenigstens ein Abluftkanal (26) verbindet den Umluftkanal (14) mit einem Abluftauslass (32). Wenigstens ein Zuluftkanal (28) verbindet einen Zulufteinlass (34) mit dem Umluftkanal (14). Der Abluftkanal (26) umfasst wenigstens ein Abluftgebläse (36), das dem Abluftauslass (32) vorgeschaltet ist. Der Abluftkanal (26) und der Zuluftkanal (28) sind thermisch gekoppelt, so dass ein Wärmeaustausch zwischen einer Abluft (46) und einer Zuluft (48) ermöglicht wird.

Die Erfindung betrifft ferner ein Verfahren zum Trocknen von Gegenständen und/oder Materialien, insbesondere Holz, welches mit dieser Vorrichtung (10) durchgeführt wird.

## Beschreibung

Die Erfindung betrifft eine Vorrichtung zum Trocknen von Gegenständen und/oder Materialien. Insbesondere betrifft die Erfindung eine Vorrichtung zum Trocknen von Holz. Weiterhin betrifft die Erfindung ein Verfahren zum Trocknen von Gegenständen und/oder Materialien, insbesondere Holz.

Das Trocknen von Gegenständen und Materialien, insbesondere Holz, erfolgt üblicherweise in beheizten Räumen oder Boxen, in denen mittels einer Gebläseanordnung Umluft erzeugt wird.

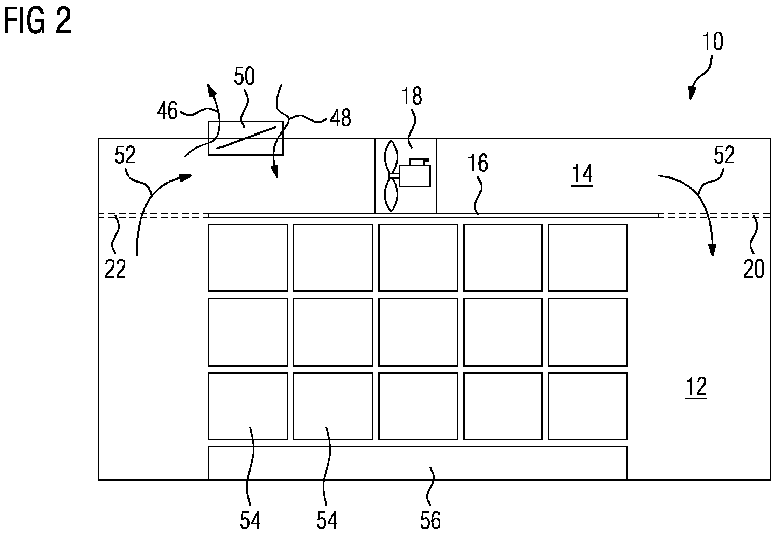

In FIG 2 ist eine schematische Seitenansicht einer Vorrichtung 10 zum Trocknen von Holz gemäß dem Stand der Technik dargestellt. Die Vorrichtung 10 umfasst einen Trockenraum 12 und einen Umluftkanal 14. Im Trockenraum 12 ist Holz 54 auf einem Podest 56 angeordnet. Zwischen dem Trockenraum 12 und dem Umluftkanal 14 befinden sich eine Trennwand 16 und zwei Heizvorrichtungen 20 und 22. Im Umluftkanal 14 befindet sich die Gebläseanordnung 18 zum Erzeugen der Umluft 52. Zwischen dem Umluftkanal 14 und dem Außenbereich befindet sich eine motorgesteuerte Luftklappenvorrichtung 50.

Zunächst wird der Trockenraum 12 auf beispielsweise 70°C aufgeheizt. Wenn das Holz 54 durchgewärmt ist, wird die Luftklappenvorrichtung 50 geöffnet, so dass gesättigte Warmluft 46 in den Außenbereich strömt und Kaltluft 48 in den Umluftkanal 14 und Trockenraum 12 eintritt. Sobald die Temperatur im Trockenraum 12 auf beispielsweise 50°C absinkt, wird die Luftklappenvorrichtung 50 wieder geschlossen und der Trockenraum 12 wieder auf beispielsweise 70°C aufgeheizt. Das Wiederaufheizen dauert etwa eine Stunde. Das Abkühlen und Aufheizen wird intervallmäßig weiderholt. Insgesamt dauert der Trocknungsvorgang etwa sechs Tage. Der Trocknungsvorgang ist zeitintensiv und benötigt relativ viel Energie.

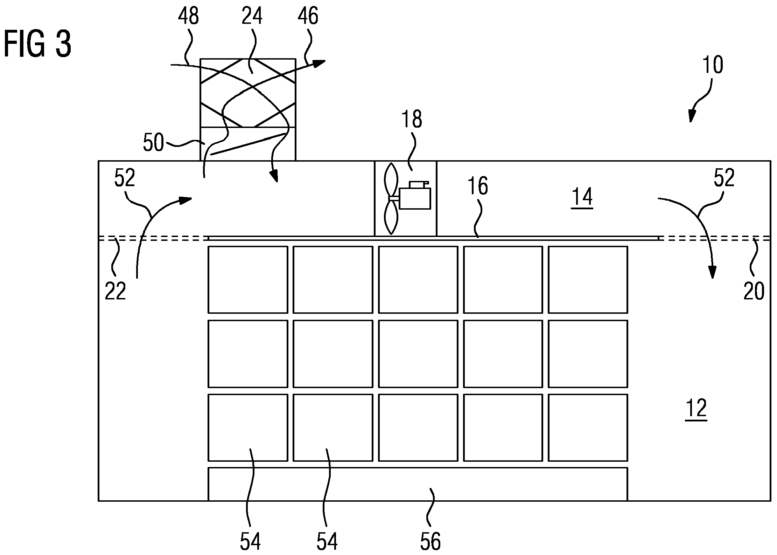

FIG 3 zeigt eine schematische Seitenansicht einer weiteren Ausführungsform der Vorrichtung 10 zum Trocknen von Holz gemäß dem Stand der Technik. Die Vorrichtung 10 in FIG 3 weist ebenfalls die Komponenten der Vorrichtung 10 in FIG 2 auf. Die Vorrichtung 10 in FIG 3 umfasst zusätzlich einen Wärmetauscher 24, der mit der Luftklappenvorrichtung 50 gekoppelt ist. Der Wärmetauscher 24 bewirkt einen Wärmeaustausch zwischen der Warmluft 46 und der Kaltluft 48, so dass auf diese Weise Wärme zurückgewonnen wird. Dadurch kann der Trocknungsvorgang auf etwa fünf Tage verkürzt werden. Da die gesättigte warme Umluft 52 schwer ist, benötigt die Gebläseanordnung 18 relativ viel elektrische Energie und die Strömungsgeschwindigkeit der Umluft 52 wird auf etwa 1 bis 2 m/s verringert. Eine freie Gebläseanordnung 18 würde dagegen eine Strömungsgeschwindigkeit der Umluft 52 von etwa 11 bis 15 m/s ermöglichen.

Es ist Aufgabe der Erfindung, eine Vorrichtung und ein Verfahren zum Trocknen von Gegenständen und Materialien, insbesondere Holz, bereitzustellen, die einen kontinuierlichen Trocknungsvorgang mit geringem Energieverbrauch ermöglichen.

Diese Aufgabe wird hinsichtlich der Vorrichtung durch eine Vorrichtung mit den Merkmalen des Anspruchs 1 und hinsichtlich des Verfahrens durch ein Verfahren mit den Merkmalen des Anspruchs 10 gelöst. Vorteilhafte Ausgestaltungen und Weiterbildungen sind in den jeweils abhängigen Ansprüchen angegeben.

Die erfindungsgemäße Vorrichtung zum Trocknen von Gegenständen und/oder Materialien, insbesondere Holz, weist Folgendes auf:
- einen Trockenraum,
- einen langgestreckten Umluftkanal, dessen Endbereiche mit dem Trockenraum gekoppelt sind,
- wenigstens eine Gebläseanordnung, die im Umluftkanal angeordnet ist, so dass eine Umluft zwischen dem Trockenraum und dem Umluftkanal zirkulieren kann,
- wenigstens eine Heizvorrichtung, die im Trockenraum und/oder Umluftkanal angeordnet und zum Erwärmen der Umluft vorgesehen ist,
- wenigstens einen Abluftkanal, der den Umluftkanal mit einem Abluftauslass verbindet, und
- wenigstens einen Zuluftkanal, der einen Zulufteinlass mit dem Umluftkanal verbindet,
- wobei der Abluftkanal wenigstens ein Abluftgebläse aufweist, das dem Abluftauslass vorgeschaltet ist, und
- wobei der Abluftkanal und der Zuluftkanal thermisch gekoppelt sind, so dass ein Wärmeaustausch zwischen einer Abluft und einer Zuluft ermöglicht wird.

Bei der erfindungsgemäßen Vorrichtung wird durch die thermische Kopplung zwischen dem Abluftkanal und dem Zuluftkanal die Zuluft durch die Abluft vorgewärmt, während das Abluftgebläse die Abluft durch den Abluftkanal absaugt und durch den entstehenden Unterdruck im Umluftkanal die Zuluft durch den Zuluftkanal angesaugt wird. Durch das permanente Vorwärmen der Zuluft und das gleichzeitige Absaugen der Abluft kann ein kontinuierlicher Trocknungsvorgang durchgeführt werden. Das intervallmäßige Abkühlen und Wiederaufheizen wie beim Stand der Technik ist nicht erforderlich. Mit der erfindungsgemäßen Vorrichtung kann der Trocknungsvorgang etwa drei bis viermal schneller durchgeführt werden als beim Stand der Technik.

In einer Ausgestaltung sind zumindest abschnittsweise der Abluftkanal innerhalb des Zuluftkanals und/oder der Zuluftkanal innerhalb des Abluftkanals angeordnet. Dadurch findet zwischen dem Zuluftkanal und Abluftkanal ein Wärmeaustausch statt, der durch Abkühlung der Abluft und Erwärmung der Zuluft eine Wärmerückgewinnung ermöglicht.

Zur thermischen Kopplung von Abluftkanal und Zuluftkanal kann die Vorrichtung wenigstens einen Wärmetauscher aufweisen, der mit dem Abluftkanal und dem Zuluftkanal gekoppelt ist, insbesondere in den Abluftkanal und den Zuluftkanal integriert ist, so dass ein Wärmeaustausch zwischen der Abluft und der Zuluft im Wärmetauscher ermöglicht wird. Der Wärmetauscher kann außerhalb oder innerhalb des Umluftkanals angeordnet sein. Der Wärmetauscher ist beispielsweise als Luft-Luft-Wärmetauscher ausgebildet und ermöglicht einen effizienten Wärmeaustausch zwischen der Abluft und der Zuluft.

Insbesondere ist der Wärmetauscher abschaltbar und/oder kurzschließbar und/oder überbrückbar, so dass der Wärmeaustausch zwischen der Abluft und der Zuluft im Wärmetauscher unterbunden wird. Dadurch kann der Wärmeaustausch zwischen der Abluft und der Zuluft gesteuert werden.

Außerdem können der Abluftauslass und/oder der Zulufteinlass, vorzugsweise mittels einer Motorsteuerung, öffenbar und schließbar sein.

Eine Ausführungsform sieht vor, dass sich zumindest ein Abschnitt des Zuluftkanals innerhalb des Umluftkanals erstreckt und dieser Abschnitt des Zuluftkanals zumindest einen Lufterwärmer für die Zuluft aufweist, der einen Wärmeaustausch zwischen der Umluft und der Zuluft ermöglicht. Auf diese Weise wird eine verstärkte Erwärmung der Zuluft durch die Umluft beim Führen der Zuluft durch den Umluftkanal, bevor diese aus dem Zuluftkanal in den Umluftkanal strömt, ermöglicht.

Gemäß einer Weiterbildung weist der Lufterwärmer ein einen Innenraum umschließendes Gehäuse auf, wobei das Gehäuse eine Vielzahl, insbesondere eine gerade Anzahl von Öffnungen zum Umluftkanal aufweist. Je zumindest zwei dieser Öffnungen sind durch je ein im Innenraum verlaufendes Luftrohr verbunden, so dass diese Luftrohre durch den Innenraum hindurchführen und eine gegenüber dem die Luftrohre umgebenen Teil des Innenraums luftdichte Strömung der Umluft durch den Lufterwärmer ermöglichen. Weiter ist das Gehäuse des Lufterwärmers derart an den Zuluftkanals angekoppelt, insbesondere in den Zuluftkanal integriert, dass die Zuluft außerhalb der Luftrohre durch den Innenraum strömen kann. Insbesondere weist somit das Gehäuse weitere Öffnungen auf, die derart luftdicht an den Zuluftkanal angekoppelt sind, dass die Zuluft über diese weiteren Öffnungen durch den die Luftrohre umgebenen Teil des Innenraums strömen kann. In einer Ausgestaltung kann ferner der die Luftrohre umgebende Teil des Innenraums des Lufterwärmers zumindest teilweise mit einem luftdurchlässigen Metallgeflecht, insbesondere Metallgestrick, gefüllt sein, das die Luftrohre von außen kontaktiert und von der Zuluft durchströmt werden kann.

Eine Ausgestaltung sieht vor, dass sich der Zuluftkanal im Wesentlichen innerhalb des Umluftkanals erstreckt. Insbesondere kann vorgesehen sein, dass die Länge des Zuluftkanals, insbesondere die Länge des Zuluftkanals innerhalb des Umluftkanals, größer als die Breite des Umluftkanals, vorzugsweise wenigstens doppelt so groß wie die Breite des Umluftkanals, ist. Dies ermöglicht eine besonders lange Verweildauer der Zuluft im wärmenden Bereich und erhöht deren Erwärmung.

Der Abluftkanal kann sich im Wesentlichen außerhalb des Umluftkanals erstrecken. Es ist aber auch im Wesentlichen eine Gleichverteilung der Erstreckung des Abluftkanals innerhalb und außerhalb des Umluftkanals möglich. Alternativ kann sich der Abluftkanal im Wesentlichen innerhalb des Umluftkanals erstrecken.

Bei einer bevorzugten Ausführungsform der Erfindung ist vorgesehen, dass die Vorrichtung wenigstens einen Wasserbehälter aufweist, wobei eine Abzweigung des Zuluftkanals mit einem oberen Bereich des Wasserbehälters gekoppelt ist, und wobei eine Abzweigung des Abluftkanals mit einem unteren Bereich des Wasserbehälters gekoppelt ist, so dass der Ausgang der Abzweigung des Abluftkanals im teilweise gefüllten Zustand unterhalb des Wasserspiegels angeordnet ist.

Insbesondere umfasst der Wasserbehälter wenigstens eine Heizeinrichtung zum Erwärmen von Wasser.

Außerdem können dem Wasserbehälter wenigstens ein Wasserzulauf und/oder ein Wasserablauf und/oder eine Anzeigeeinrichtung zugeordnet sein. Der Wasserzulauf und der Wasserablauf ermöglichen einen schnellen Austausch des Wassers im Wasserbehälter.

Das erfindungsgemäße Verfahren zum Trocknen von Gegenständen und/oder Materialien, insbesondere Holz, wird mit der vorstehend beschriebenen Vorrichtung durchgeführt und umfasst folgende Phasen:
- eine Aufheizphase zum Aufheizen des Trockenraums und des Umluftkanals, wobei die Heizvorrichtung aktiviert ist und die Zuluft mittels des Abluftgebläses angesaugt wird,
- eine Durchwärmphase zum Abbauen des Überdrucks im Trockenraum, Umluftkanal, Wärmetauscher, Abluftkanal und Zuluftkanal, wobei der Abluftauslass und der Zulufteinlass geöffnet sind und das Abluftgebläse abgeschaltet ist,
- eine Trocknungsphase zum Trocknen der Gegenstände und/oder Materialien, wobei der Abluftauslass und der Zulufteinlass geöffnet sind und das Abluftgebläse eingeschaltet ist, so dass die Zuluft durch den Zuluftkanal angesaugt und im Wärmetauscher und Zuluftkanal erwärmt wird, während die Abluft durch den Abluftkanal nach außen abgeführt wird, und wobei die Gebläseanordnung eingeschaltet ist, so dass die Umluft zwischen dem Trockenraum und dem Umluftkanal zirkuliert, und
- eine Abkühlphase zum Abkühlen der Vorrichtung und der Gegenstände und/oder Materialien, wobei die Heizvorrichtung abgeschaltet ist.

Vorzugsweise ist nach der Abkühlphase eine Konditionierphase zum Einstellen der Holzfeuchtigkeit vorgesehen, wobei der Abluftauslass und der Zulufteinlass geschlossen sind, das Abluftgebläse eingeschaltet ist und die Luft durch kaltes Wasser im Wasserbehälter geblasen wird, und wobei die Heizvorrichtung eingeschaltet ist.

Beispielsweise beträgt während der Konditionierphase nach einem Wasseraustausch die Wassertemperatur im Wasserbehälter zwischen 14°C und 20°C, vorzugsweise etwa 17°C, wobei die Umluft im Umluftkanal und Trockenraum durch die wenigstens eine Heizvorrichtung auf 20°C bis 24°C, vorzugsweise etwa 22°C, erwärmt wird, so dass bei einer relativen Feuchtigkeit von etwa 70 % im Trockenraum eine Holzfeuchtigkeit von etwa 13 % eingestellt wird.

Insbesondere ist während der Aufheizphase die Heizeinrichtung aktiviert, der Wasserbehälter beheizt und die Zuluft wird über den Wasserbehälter angesaugt.

Dabei wird beispielsweise während der Aufheizphase die Zuluft im Wasserbehälter auf 60°C bis 80°C, vorzugsweise etwa 70°C, erwärmt und durch die wenigstens eine Heizvorrichtung (20, 22) auf 70°C bis 80°C, vorzugsweise etwa 75°C, überheizt.

Schließlich kann während der Abkühlphase der Wärmetauscher kurzgeschlossen und/oder überbrückt sein, so dass kein Wärmeaustausch zwischen dem Abluftkanal und dem Zuluftkanal innerhalb des Wärmetauschers stattfindet.

Die Erfindung wird nachstehend auch hinsichtlich weiterer Merkmale und Vorteile anhand der Beschreibung einer bevorzugten Ausführungsform und unter Bezugnahme auf die beigefügten Zeichnungen näher erläutert.

Es zeigen
- FIG 1: eine schematische Perspektivansicht einer Vorrichtung zum Trocknen von Holz gemäß einer bevorzugten Ausführungsform der Erfindung,
- FIG 2: eine schematische Seitenansicht der Vorrichtung zum Trocknen von Holz gemäß dem Stand der Technik,
- FIG 3: eine schematische Seitenansicht einer weiteren Ausführungsform der Vorrichtung zum Trocknen von Holz gemäß dem Stand der Technik, und
- FIG 4: eine schematische Perspektivansicht einer Vorrichtung zum Trocknen von Holz gemäß einer weiteren bevorzugten Ausführungsform der Erfindung.

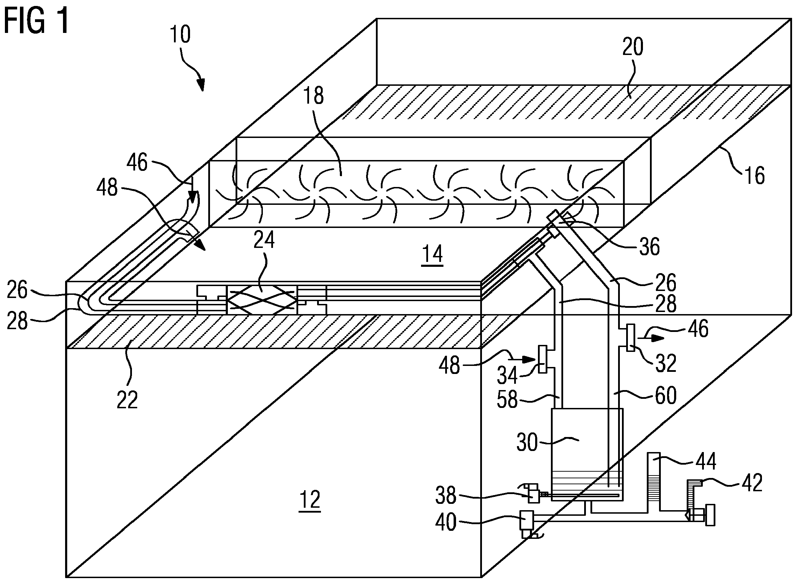

FIG 1 zeigt eine schematische Perspektivansicht einer Vorrichtung 10 zum Trocknen von Holz gemäß einer bevorzugten Ausführungsform der Erfindung.

Die Vorrichtung 10 umfasst einen Trockenraum 12 und einen Umluftkanal 14. Bei dieser Ausführungsform ist der Umluftkanal 14 oberhalb des Trockenraums 12 angeordnet, wobei der Umluftkanal 14 ebenso lang und breit wie der Trockenraum 12 ist. Zwischen dem Trockenraum 12 und dem Umluftkanal 14 befindet sich eine Trennwand 16. In den Endbereichen ist jeweils eine erste Heizvorrichtung 20 bzw. eine zweite Heizvorrichtung 22 zwischen dem Trockenraum 12 und dem Umluftkanal 14 angeordnet. In diesem Beispiel sind die Heizvorrichtungen 20 und 22 gitterförmig und bilden die Fortsetzungen der Trennwand 16. Die Heizvorrichtungen 20 und 22 können beispielsweise elektrische Heizelemente oder warmwasserführende Heizrohre aufweisen. Weiterhin befindet sich im Umluftkanal 14 eine Gebläseanordnung 18, die sich vorzugsweise über die gesamte Breite des Umluftkanals 14 erstreckt. In diesem Beispiel umfasst die Gebläseanordnung 18 sechs Axialgebläse, die nebeneinander angeordnet sind.

Die Vorrichtung 10 umfasst außerdem einen Wärmetauscher 24, einen Abluftkanal 26, einen Zuluftkanal 28 und einen Wasserbehälter 30. Der Wärmetauscher 24 ist als ein Luft-Luft-Wärmetauscher ausgebildet und innerhalb des Umluftkanals 14 angeordnet. Beispielsweise ist der Wärmetauscher 24 ein Kreuzstromwärmetauscher. Der Wärmetauscher 24 ist mit dem Abluftkanal 26 und dem Zuluftkanal 28 gekoppelt, so dass ein Wärmeaustausch zwischen dem Abluftkanal 26 und dem Zuluftkanal 28 ermöglicht wird. Der Wärmetauscher 24 kann kurzgeschlossen werden, so dass der Wärmeaustausch zwischen dem Abluftkanal 26 und dem Zuluftkanal 28 innerhalb des Wärmetauschers 24 unterbunden wird. Der Abluftkanal 26 und der Zuluftkanal 28 befinden sich zum größten Teil innerhalb des Umluftkanals 14. Im Umluftkanal 14 erstreckt sich der Abluftkanal 26 innerhalb des Zuluftkanals 28. Der Abluftkanal 26 und der Zuluftkanal 28 bilden somit ein Rohr-in-Rohr-System innerhalb des Umluftkanals 14. Somit wird entlang des gesamten Abluftkanals 26 und Zuluftkanals 28 innerhalb des Umluftkanals 14 ebenfalls ein Wärmeaustausch zwischen dem Abluftkanal 26 und dem Zuluftkanal 28 ermöglicht.

Der Eingang des Abluftkanals 26 und der Ausgang des Zuluftkanals 28 befinden sich neben einer Seitenwand des Umluftkanals 14. Der Abluftkanal 26 und der Zuluftkanal 28 verlaufen zunächst entlang der Seitenwand des Umluftkanals 14, anschließend entlang der Stirnwand des Umluftkanals 14 und schließlich entlang der gegenüberliegenden Seitenwand des Umluftkanals 14. Neben der Stirnwand des Umluftkanals 14 ist der Wärmetauscher 24 angeordnet und mit dem Abluftkanal 26 und Zuluftkanal 28 gekoppelt. In diesem Beispiel durchdringen der Abluftkanal 26 und der Zuluftkanal 28 separat die Seitenwand des Umluftkanals 14.

Der Abluftkanal 26 weist außerhalb des Umluftkanals 14 einen öffenbaren und schließbaren Abluftauslass 32 auf. Vorzugsweise ist der Abluftauslass 32 als motorgesteuerte Luftklappe ausgebildet. Weiterhin umfasst der Abluftkanal 26 ein Abluftgebläse 36, das dem Abluftauslass 32 vorgeschaltet ist. Der Zuluftkanal 28 weist außerhalb des Umluftkanals 14 einen öffenbaren und schließbaren Zulufteinlass 34 auf. Vorzugsweise ist der Zulufteinlass 34 als motorgesteuerte Luftklappe ausgebildet.

Eine Abzweigung 58 des Zuluftkanals 28 ist mit einem oberen Bereich des Wasserbehälters 30 gekoppelt. In diesem Beispiel ist das Ende der Abzweigung 58 des Zuluftkanals 28 mit der Oberseite des Wasserbehälters 30 verbunden. Eine Abzweigung 60 des Abluftkanals 26 ist mit einem unteren Bereich des Wasserbehälters 30 gekoppelt. Dabei dringt die Abzweigung 60 des Abluftkanals 26 in den Wasserbehälter 30 so tief ein, dass das Ende der Abzweigung 60 des Abluftkanals 26 unterhalb des Wasserspiegels angeordnet ist. Vorzugsweise sind der Abluftkanal 26 und der Zuluftkanal 28 außerhalb des Umluftkanals 14 thermisch isoliert. Der Abluftauslass 32 und der Zulufteinlass 34 sind zwischen dem Umluftkanal 14 und dem Wasserbehälter 30 angeordnet.

Im unteren Bereich des Wasserbehälters 30 ist eine Heizeinrichtung 38 zum Erwärmen des Wassers angeordnet. Die Heizeinrichtung 38 kann beispielsweise elektrische Heizelemente oder warmwasserführende Heizrohre aufweisen. Weiterhin sind dem Wasserbehälter 30 ein Wasserzulauf 40 und ein Wasserablauf 42 sowie eine Anzeigeeinrichtung 44 zum Überwachen des Wasserstands im Wasserbehälter 30 zugeordnet. Beispielsweise werden der Wasserzulauf 40 und der Wasserablauf 42 durch jeweils ein Magnetventil gesteuert. Durch den Wasserzulauf 42 kann auch anfallendes Kondensat abgeführt werden.

Die Gebläseanordnung 18 im Umluftkanal 14 erzeugt eine Umluft, die zunächst horizontal im Umluftkanal 14 strömt und anschließend durch die erste Heizvorrichtung 20 nach unten in den Trockenraum 12 eindringt. Danach strömt die Umluft im Wesentlichen horizontal innerhalb des Trockenraums 12 und dringt durch die zweite Heizvorrichtung 22 wieder in den Umluftkanal 14 ein. Die Umluft zirkuliert somit zwischen dem Trockenraum 12 und dem Umluftkanal 14.

Über den Eingang des Abluftkanals 26, der sich innerhalb des Umluftkanals 14 befindet, wird ein Teil der Umluft als Abluft 46 dem Abluftkanal 26 zugeführt. Die Abluft 46 passiert zunächst einen Abschnitt des Abluftkanals 26, der sich innerhalb des Zuluftkanals 28 befindet, anschließend den Wärmetauscher 24, danach einen weiteren Abschnitt des Abluftkanals 26, der sich innerhalb des Zuluftkanals 28 befindet, und schließlich das Abluftgebläse 36. Zuletzt gelangt die Abluft 46 durch den Abluftauslass 32 in den Außenbereich.

Da das Abluftgebläse 36 die Abluft 46 absaugt, wird im Umluftkanal 14 ein Unterdruck erzeugt. Der Unterdruck im Umluftkanal 14 bewirkt einerseits, dass der Gegendruck für die Gebläseanordnung 18 reduziert und eine höhere Strömungsgeschwindigkeit der Umluft und eine schnelle Feuchtigkeitsaufnahme ermöglicht wird. Andererseits bewirkt der Unterdruck im Umluftkanal 14, dass die Zuluft 48 über den Zuluftkanal 28 angesaugt wird. Die Zuluft tritt durch den Zulufteinlass 34 in den Zuluftkanal 28 ein. Da innerhalb des Zuluftkanals 28 der Abluftkanal 26 mit der wärmeren Abluft 46 angeordnet ist, wird die Zuluft 48 vorgewärmt. Eine weitere Erwärmung der Zuluft 48 erfolgt in dem Wärmetauscher 24. Die Wärmekapazität der feuchten Abluft 46 ist etwa doppelt so hoch wie die der Zuluft 48, was zu einer schnellen Erwärmung der Zuluft 48 beiträgt. Zusätzlich wird die Zuluft 48 von der Umluft erwärmt, da sich der Zuluftkanal 28 im Wesentlichen innerhalb des Umluftkanals 14 befindet. In dem Abschnitt nach dem Wärmetauscher 24 ist innerhalb des Zuluftkanals 28 auch der Abluftkanal 26 mit der wärmeren Abluft 46 angeordnet, so dass die Zuluft 48 weiter erwärmt wird und in den Umluftkanal 14 eintritt.

Aus einem Mollier-Diagramm lässt sich entnehmen, dass bei einer Trocknungstemperatur von 75°C die Luft etwa 420 g Feuchtigkeit pro kg Luft aufnimmt. Im Gegensatz dazu beträgt bei einer maximalen Sommertemperatur von 40°C die Feuchtigkeitsaufnahme der Luft etwa 14 g pro kg Luft. Die schnelle Erwärmung der Zuluft 48 im Zuluftkanal 28 ermöglicht, dass die Umluft sehr schnell eine hohe Feuchtigkeit annimmt. Und das Holz trocknet.

Der mit der Vorrichtung 10 durchgeführte Trocknungsvorgang umfasst vorzugsweise eine Aufheizphase, eine Durchwärmphase, eine Trocknungsphase, eine Abkühlphase und eine Konditionierphase.

In der Aufheizphase wird die Heizeinrichtung 38 aktiviert und der Wasserbehälter 30 beheizt. Der Abluftauslass 32 und der Zulufteinlass 34 sind während der Aufheizphase geschlossen. Dadurch wird die Zuluft 48 über den Wasserbehälter 30 durch das Abluftgebläse 36 angesaugt. Beispielweise wird im Wasserbehälter 30 die Zuluft 48 auf etwa 70°C erwärmt und durch die Heizvorrichtungen 20 und 22 auf etwa 75°C überheizt. Das gebundene Wasser im Holz wandert dadurch an die Oberfläche und wird von der trockenen Luft aufgenommen. Auf diese Weise werden eine Volumenausdehnung des Wassers und daraus resultierende Mikrorisse im Holz verhindert.

In der Durchwärmphase werden der Abluftauslass 32 und der Zulufteinlass 34 geöffnet und das Abluftgebläse 36 abgeschaltet. Dadurch kann der Überdruck aus dem Trockenraum 12, dem Umluftkanal 14, dem Wärmetauscher 24, dem Abluftkanal 26 und dem Zuluftkanal 28 entweichen.

Während der Trocknungsphase bleiben der Abluftauslass 32 und der Zulufteinlass 34 geöffnet. Dabei wird das Abluftgebläse 36 eingeschaltet. Die Zuluft 48 wird durch den Zuluftkanal 28 angesaugt und im Wärmetauscher 24 und im Rohr-in-Rohr-System erwärmt. Die Abluft 46 wird durch den Abluftkanal 26 in den Außenbereich abgeführt. Die Gebläseanordnung 18 ist eingeschaltet, so dass die Umluft zwischen dem Trockenraum 12 und dem Umluftkanal 14 zirkuliert. Während der Trocknungsphase wird ein kontinuierlicher Trocknungsprozess durchgeführt.

Sobald das Holz getrocknet ist, wird die Abkühlphase eingeleitet. In der Abkühlphase werden die Heizvorrichtungen 20 und 22 abgeschaltet. Das Abluftgebläse 36 bleibt eingeschaltet. Der Wärmetauscher 24 wird kurzgeschlossen und/oder überbrückt, so dass kein Wärmeaustausch zwischen dem Abluftkanal 26 und dem Zuluftkanal 28 innerhalb des Wärmetauschers 24 stattfindet. Die Abkühlphase trägt dazu bei, Schäden aufgrund eines Zellkollapses im Holz zu vermeiden.

Wenn das Holz abgekühlt ist, wird vorzugsweise in der Konditionierphase die Holzfeuchtigkeit eingestellt. Dabei wird bei geschlossenem Abluftauslass 32 und Zulufteinlass 34 und bei eingeschaltetem Abluftgebläse 36 die Luft durch kaltes Wasser im Wasserbehälter 30 geblasen. Beispielsweise beträgt nach einem Wasseraustausch die Wassertemperatur im Wasserbehälter 30 etwa 17°C. Durch die Heizvorrichtungen 20 und 22 wird die Umluft im Umluftkanal 14 und Trockenraum 12 auf etwa 22°C erwärmt, so dass sich bei einer relativen Feuchtigkeit von etwa 70 % eine Holzfeuchtigkeit von etwa 13 % einstellt.

In FIG 2 ist eine schematische Seitenansicht einer Vorrichtung 10 zum Trocknen von Holz gemäß dem Stand der Technik dargestellt. Die Vorrichtung 10 umfasst den Trockenraum 12 und den Umluftkanal 14. Im Trockenraum 12 ist Holz 54 auf einem Podest 56 angeordnet. Zwischen dem Trockenraum 12 und dem Umluftkanal 14 befindet sich die Trennwand 16 und zwei Heizvorrichtungen 20 und 22. Im Umluftkanal 14 befindet sich die Gebläseanordnung 18 zum Erzeugen der Umluft. Zwischen dem Umluftkanal 14 und dem Außenbereich befindet sich eine motorgesteuerte Luftklappenvorrichtung 50.

Zunächst wird der Trockenraum 12 auf beispielsweise 70°C aufgeheizt. Wenn das Holz 54 durchgewärmt ist, wird die Luftklappenvorrichtung 50 geöffnet, so dass gesättigte Warmluft 46 in den Außenbereich strömt und Kaltluft 48 in den Umluftkanal 14 und Trockenraum 12 eintritt. Sobald die Temperatur im Trockenraum 12 auf beispielsweise 50°C absinkt, wird die Luftklappenvorrichtung 50 wieder geschlossen und der Trockenraum 12 wieder auf beispielsweise 70°C aufgeheizt. Das Wiederaufheizen dauert etwa eine Stunde. Das Abkühlen und Aufheizen wird intervallmäßig weiderholt. Insgesamt dauert der Trocknungsvorgang etwa sechs Tage. Der Trocknungsvorgang ist zeitintensiv und hat einen hohen Energieverbrauch.

FIG 3 zeigt eine schematische Seitenansicht einer weiteren Ausführungsform der Vorrichtung 10 zum Trocknen von Holz gemäß dem Stand der Technik. Die Vorrichtung 10 in FIG 3 weist ebenfalls die Komponenten der Vorrichtung 10 in FIG 2 auf. Die Vorrichtung 10 in FIG 3 umfasst zusätzlich den Wärmetauscher 24, der mit der Luftklappenvorrichtung 50 gekoppelt ist. Der Wärmetauscher 24 bewirkt einen Wärmeaustausch zwischen der Warmluft 46 und der Kaltluft 48, so dass auf diese Weise Wärme zurückgewonnen wird. Dadurch kann der Trocknungsvorgang auf etwa fünf Tage verkürzt werden. Da die gesättigte warme Umluft 52 schwer ist, benötigt die Gebläseanordnung 18 relativ viel elektrische Energie und die Strömungsgeschwindigkeit der Umluft 52 wird auf etwa 1 bis 2 m/s verringert. Eine freie Gebläseanordnung 18 würde eine Strömungsgeschwindigkeit der Umluft 52 von etwa 11 bis 15 m/s ermöglichen.

Im Gegensatz dazu ermöglicht die erfindungsgemäße Vorrichtung 10 die kontinuierliche Trocknungsphase. Das intervallmäßige Abkühlen und Wiederaufheizen wie beim Stand der Technik ist nicht erforderlich. Durch das permanente Vorwärmen der Zuluft 48 und das gleichzeitige Absaugen der Abluft 46 kann während der Trocknungsphase die Temperatur im Trockenraum 12 und Umluftkanal 14 im Wesentlichen auf konstantem Niveau gehalten werden. Mit der erfindungsgemäßen Vorrichtung 10 lässt sich der Trocknungsvorgang etwa drei bis viermal so schnell durchführen als beim Stand der Technik.

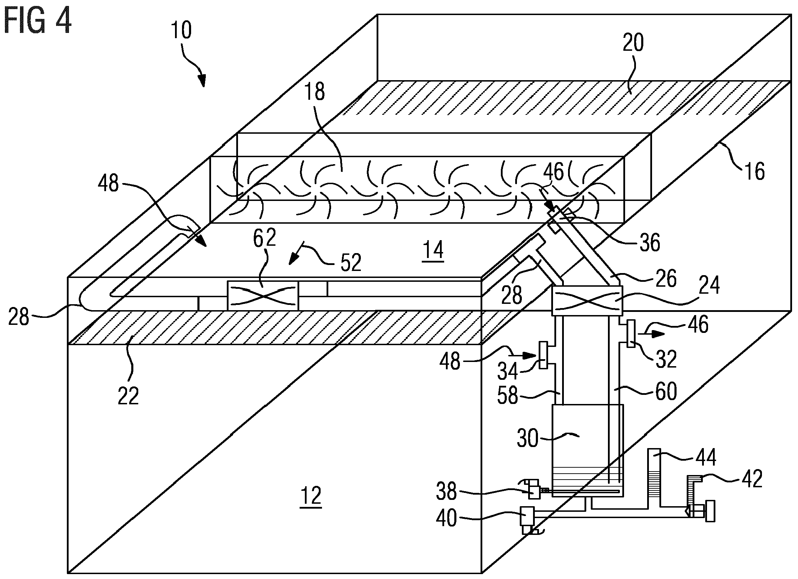

FIG 4 zeigt eine schematische Perspektivansicht einer Vorrichtung 10 zum Trocknen von Holz gemäß einer weiteren bevorzugten Ausführungsform der Erfindung. Diese Vorrichtung 10 entspricht weitgehend der Vorrichtung nach FIG 1, so dass auf die diesbezüglichen Ausführungen verwiesen wird. Die Vorrichtung nach FIG 4 unterscheidet sich von der Vorrichtung nach FIG 1 dadurch, dass sich der Abluftkanal 26 zum größten Teil außerhalb des Umluftkanals 14 erstreckt. Ein weiterer Unterschied liegt darin, dass der Wärmetauscher 24 außerhalb des Umluftkanals 14 angeordnet ist und dort Abluftkanal 26 und Zuluftkanal 28 koppelt, so dass ein Wärmeaustausch zwischen dem Abluftkanal 26 und dem Zuluftkanal 28 ermöglicht wird. Ferner unterscheiden sich die Ausführungsformen dadurch, dass der Abluftkanal 26 sich im Umluftkanals 14 nicht innerhalb des Zuluftkanals 28 erstreckt, sondern getrennt vom Zuluftkanal 28 verläuft. Abluftkanal 26 und Zuluftkanal 28 bilden somit kein Rohr-in-Rohr-System innerhalb des Umluftkanals 14. In FIG 4 ist zu erkennen, dass sich der Zuluftkanal 28 wie in FIG 1 zum größten Teil innerhalb des Umluftkanals 14 befindet. Im Unterschied zur Ausführungsform nach FIG 1 weist die Ausführungsform nach FIG 4 in diesem Abschnitt des Zuluftkanals 28, der sich innerhalb des Umluftkanals 14 erstreckt, einen Lufterwärmer 62 für die Zuluft 48 auf, der einen Wärmeaustausch zwischen der Umluft 52 des Umluftkanals 14 und der Zuluft 48 des Zuluftkanals 28 ermöglicht.

Der Lufterwärmer 62 ist in FIG 4 nur symbolisch dargestellt. Der Lufterwärmer 62 kann derart ausgebildet sein, dass er ein einen Innenraum umschließendes Gehäuse aufweist, insbesondere ein aus, vorzugsweise eloxierten, Aluminiumprofilen und Aluminiumblechen hergestelltes Gehäuse. Weiter kann dieses Gehäuse eine gerade Anzahl von Öffnungen zum Umluftkanal 14 aufweist, wobei je zwei dieser Öffnungen durch je ein im Innenraum verlaufendes Luftrohr verbunden sind, so dass diese Luftrohre durch den Innenraum hindurchführen und eine gegenüber dem die Luftrohre umgebenden Teil des Innenraums luftdichte Strömung der Umluft 52 durch den Lufterwärmer 62 ermöglichen. Hierzu können die Luftrohre durch die Öffnungen gesteckt und mit den Aluminiumblechen des Gehäuses verpresst sein, so dass eine luftdichte Anbindung erfolgt und gleichzeitig ein Kontakt zwischen Luftrohren und Gehäuse gebildet ist. Weiter kann das Gehäuse des Lufterwärmers 62 derart an den Zuluftkanals 28 angekoppelt sein, insbesondere in den Zuluftkanal 28 integriert sein, dass die Zuluft 48 außerhalb der Luftrohre durch den Innenraum strömen kann. Insbesondere weist somit das Gehäuse weitere Öffnungen auf, die derart luftdicht an den Zuluftkanal angekoppelt sind, dass die Zuluft über diese weiteren Öffnungen durch den die Luftrohre umgebenen Teil des Innenraums strömen kann. Schließlich kann der die Luftrohre umgebende Teil des Innenraums des Lufterwärmers 62 zumindest teilweise mit einem luftdurchlässigen Metallgeflecht, insbesondere einem Metallgestrick, gefüllt sein, das die Luftrohre von außen kontaktiert und von der Zuluft 48 durchströmt werden kann. Bei dem Metallgeflecht kann es sich um ein Aluminiumgeflecht handeln, insbesondere um ein eloxiertes Aluminiumgeflecht. Auf diese Weise kann ein Wärmeaustausch von der Umluft 52 an die Zuluft 48 nicht nur über Außenwandungen der Luftrohre und das Gehäuse des Lufterwärmers 62, sondern auch über das Metallgeflecht, das Wärme von den Luftrohren und/oder dem Gehäuse aufnimmt, erfolgen. Ein derartiger, gegebenenfalls zusätzlich vorgesehener Lufterwärmer 62 im Umluftkanal 14 könnte auch statt in den Zuluftkanal 28 in einen weiteren Luftkanal integriert werden, wobei die durch diesen weiteren Luftkanal strömende Luft beim Durchströmen des Lufterwärmers 62 erwärmt werden kann. Diese erwärmte Luft kann dann über den weiteren Luftkanal einer weiteren Wärmesenke zugeführt werden, beispielsweise einem Raum, der durch diese erwärmte Luft aufgeheizt wird.

### Bezugszeichen liste

- 10: Vorrichtung zum Trocken
- 12: Trockenraum
- 14: Umluftkanal
- 16: Trennwand
- 18: Gebläseanordnung
- 20: erste Heizvorrichtung
- 22: zweite Heizvorrichtung
- 24: Wärmetauscher
- 26: Abluftkanal
- 28: Zuluftkanal
- 30: Wasserbehälter
- 32: Abluftauslass
- 34: Zulufteinlass
- 36: Abluftgebläse
- 38: Heizeinrichtung
- 40: Wasserzulauf
- 42: Wasserablauf
- 44: Anzeigeeinrichtung
- 46: Abluft
- 48: Zuluft
- 50: Luftklappenvorrichtung
- 52: Umluft
- 54: Holz
- 56: Podest
- 58: Abzweigung des Zuluftkanals
- 60: Abzweigung des Abluftkanals
- 62: Lufterwärmer

## Patentansprüche

1. Vorrichtung (10) zum Trocknen von Gegenständen und/oder Materialien, insbesondere Holz, die Folgendes aufweist:
- einen Trockenraum (12),
- einen langgestreckten Umluftkanal (14), dessen Endbereiche mit dem Trockenraum (12) gekoppelt sind,
- wenigstens eine Gebläseanordnung (18), die im Umluftkanal (14) angeordnet ist, so dass eine Umluft zwischen dem Trockenraum (12) und dem Umluftkanal (14) zirkulieren kann,
- wenigstens eine Heizvorrichtung (20, 22), die im Trockenraum (12) und/oder Umluftkanal (14) angeordnet und zum Erwärmen der Umluft vorgesehen ist,
- wenigstens einen Abluftkanal (26), der den Umluftkanal (14) mit einem Abluftauslass (32) verbindet, und
- wenigstens einen Zuluftkanal (28), der einen Zulufteinlass (34) mit dem Umluftkanal (14) verbindet,
- wobei der Abluftkanal (26) wenigstens ein Abluftgebläse (36) aufweist, das dem Abluftauslass (32) vorgeschaltet ist, und
- wobei der Abluftkanal (26) und der Zuluftkanal (28) thermisch gekoppelt sind, so dass ein Wärmeaustausch zwischen einer Abluft (46) und einer Zuluft (48) ermöglicht wird.

2. Vorrichtung (10) nach Anspruch 1,
**dadurch gekennzeichnet, dass**
die Vorrichtung (10) zur thermischen Kopplung von Abluftkanal (26) und Zuluftkanal (28) wenigstens einen Wärmetauscher (24) aufweist, der mit dem Abluftkanal (26) und dem Zuluftkanal (28) gekoppelt ist, so dass ein Wärmeaustausch zwischen der Abluft (46) und der Zuluft (48) im Wärmetauscher (24) ermöglicht wird.

3. Vorrichtung nach Anspruch 2,
**dadurch gekennzeichnet, dass**
der Wärmetauscher (24) abschaltbar und/oder überbrückbar ist, so dass der Wärmeaustausch zwischen der Abluft (46) und der Zuluft (48) im Wärmetauscher (24) unterbunden wird.

4. Vorrichtung nach einem der vorhergehenden Ansprüche,
**dadurch gekennzeichnet, dass**
sich zumindest ein Abschnitt des Zuluftkanals (28) innerhalb des Umluftkanals (14) erstreckt und dieser Abschnitt des Zuluftkanals (28) zumindest einen Lufterwärmer (62) für die Zuluft (48) aufweist, der einen Wärmeaustausch zwischen der Umluft (52) und der Zuluft (48) ermöglicht.

5. Vorrichtung nach Anspruch 4
**dadurch gekennzeichnet, dass**
der Lufterwärmer (62) ein einen Innenraum umschließendes Gehäuse aufweist, wobei das Gehäuse eine Vielzahl von Öffnungen zum Umluftkanal (14) aufweist, wobei je zumindest zwei dieser Öffnungen durch je ein im Innenraum verlaufendes Luftrohr verbunden sind, so dass diese Luftrohre durch den Innenraum hindurchführen und eine gegenüber dem die Luftrohre umgebenen Teil des Innenraums luftdichte Strömung der Umluft (52) durch den Lufterwärmer (62) ermöglichen,
wobei das Gehäuse des Lufterwärmers (62) derart an den Zuluftkanals (28) angekoppelt ist, dass die Zuluft (48) außerhalb der Luftrohre durch den Innenraum strömen kann.

6. Vorrichtung nach Anspruch 5,
**dadurch gekennzeichnet, dass**
der die Luftrohre umgebende Teil des Innenraums des Lufterwärmers (62) zumindest teilweise mit einem luftdurchlässigen Metallgeflecht gefüllt ist, das die Luftrohre von außen kontaktiert und von der Zuluft (48) durchströmt werden kann.

7. Vorrichtung nach einem der vorhergehenden Ansprüche,
**dadurch gekennzeichnet, dass**
der Zuluftkanal (28) sich im Wesentlichen innerhalb des Umluftkanals (14) erstreckt.

8. Vorrichtung nach einem der vorhergehenden Ansprüche,
**dadurch gekennzeichnet, dass**
die Vorrichtung (10) wenigstens einen Wasserbehälter (30) aufweist, wobei eine Abzweigung (58) des Zuluftkanals (28) mit einem oberen Bereich des Wasserbehälters (30) gekoppelt ist, und wobei eine Abzweigung (60) des Abluftkanals (26) mit einem unteren Bereich des Wasserbehälters (30) gekoppelt ist, so dass der Ausgang der Abzweigung (60) des Abluftkanals (26) im teilweise gefüllten Zustand unterhalb des Wasserspiegels angeordnet ist.

9. Vorrichtung nach Anspruch 8,
**dadurch gekennzeichnet, dass**
dem Wasserbehälter (30) wenigstens ein Wasserzulauf (40), ein Wasserablauf (42) und/oder eine Anzeigeeinrichtung (44) zugeordnet ist.

10. Verfahren zum Trocknen von Gegenständen und/oder Materialien, insbesondere Holz, welches Verfahren mit der Vorrichtung (10) nach einem der vorhergehenden Ansprüche durchgeführt wird und folgende Phasen umfasst:
- eine Aufheizphase zum Aufheizen des Trockenraums (12) und des Umluftkanals (14), wobei die Heizvorrichtung (20, 22) aktiviert ist und die Zuluft (48) mittels des Abluftgebläses (36) angesaugt wird,
- eine Durchwärmphase zum Abbauen des Überdrucks im Trockenraum (12), Umluftkanal (14), Wärmetauscher (24), Abluftkanal (26) und Zuluftkanal (28), wobei der Abluftauslass (32) und der Zulufteinlass (34) geöffnet sind und das Abluftgebläse (36) abgeschaltet ist,
- eine Trocknungsphase zum Trocknen der Gegenstände und/oder Materialien, wobei der Abluftauslass (32) und der Zulufteinlass (34) geöffnet sind und das Abluftgebläse (36) eingeschaltet ist, so dass die Zuluft (48) durch den Zuluftkanal (28) angesaugt und im Wärmetauscher (24) und Zuluftkanal (28) erwärmt wird, während die Abluft (46) durch den Abluftkanal (26) nach außen abgeführt wird, und wobei die Gebläseanordnung (18) eingeschaltet ist, so dass die Umluft zwischen dem Trockenraum (12) und dem Umluftkanal (14) zirkuliert, und
- eine Abkühlphase zum Abkühlen der Vorrichtung (10) und der Gegenstände und/oder Materialien, wobei die Heizvorrichtung (20, 22) abgeschaltet ist.

11. Verfahren nach Anspruch 10,
**dadurch gekennzeichnet, dass**
nach der Abkühlphase eine Konditionierphase zum Einstellen der Holzfeuchtigkeit vorgesehen ist, wobei der Abluftauslass (32) und der Zulufteinlass (34) geschlossen sind, das Abluftgebläse (36) eingeschaltet ist und die Luft durch kaltes Wasser im Wasserbehälter (30) geblasen wird, und wobei die Heizvorrichtung (20, 22) eingeschaltet ist.

12. Verfahren nach Anspruch 11,
**dadurch gekennzeichnet, dass**
während der Konditionierphase nach einem Wasseraustausch die Wassertemperatur im Wasserbehälter (30) zwischen 14°C und 20°C beträgt und die Umluft im Umluftkanal (14) und Trockenraum (12) durch die wenigstens eine Heizvorrichtung (20, 22) auf 20°C bis 24°C erwärmt wird, so dass bei einer relativen Feuchtigkeit von etwa 70 % im Trockenraum (12) eine Holzfeuchtigkeit von etwa 13 % eingestellt wird.

13. Verfahren nach einem der Ansprüche 10 bis 12,
**dadurch gekennzeichnet, dass**
während der Aufheizphase die Heizeinrichtung (38) aktiviert ist, der Wasserbehälter (30) beheizt und die Zuluft (48) über den Wasserbehälter (30) angesaugt wird.

14. Verfahren nach Anspruch 13,
**dadurch gekennzeichnet, dass**
während der Aufheizphase die Zuluft (48) im Wasserbehälter (30) auf 60°C bis 80°C erwärmt und durch die wenigstens eine Heizvorrichtung (20, 22) auf 70°C bis 80°C überheizt wird.

15. Verfahren nach einem der Ansprüche 10 bis 14,
**dadurch gekennzeichnet, dass**
während der Abkühlphase der Wärmetauscher (24) kurzgeschlossen und/oder überbrückt ist, so dass kein Wärmeaustausch zwischen dem Abluftkanal (26) und dem Zuluftkanal (28) innerhalb des Wärmetauschers (24) stattfindet.
